# FASCICULE DE BREVET EUROPEEN

(11) **EP 3 220 193 B1**
(45) Date de publication et mention de la délivrance du brevet: **25.07.2018**
(21) Numéro de dépôt: 17159806.3
(22) Date de dépôt: 08.03.2017
(51) Int. Cl.: G02F 1/365, G02F 1/025, G02B 6/12

(54) **GUIDE A ONDE LENTE**
LANGSAMES LICHT IM WELLENLEITER
SLOW-LIGHT WAVEGUIDE

(30) Priorité: 17.03.2016 FR 1652259
(43) Date de publication de la demande: 20.09.2017
(73) Titulaire: COMMISSARIAT À L'ÉNERGIE ATOMIQUE ET AUX ÉNERGIES ALTERNATIVES, 75015 Paris (FR)
(72) Inventeur: BEN BAKIR, Badhise, 38590 BREZINS (FR); HASSAN, Karim, 38500 VOIRON (FR)
(74) Mandataire: Colombo, Michel

(56) Documents cités:
- JP-A- 2013 195 715
- SHAYAN MOOKHERJEA ET AL: "Localization in silicon nanophotonic slow-light waveguides", NATURE PHOTONICS, vol. 2, no. 2, 27 janvier 2008 (2008-01-27), pages 90-93, XP55327122, UK ISSN: 1749-4885, DOI: 10.1038/nphoton.2007.278
- CORRADO SCIANCALEPORE ET AL: "Low-loss adiabatically-tapered high-contrast gratings for slow-wave modulators on SOI", OPTICAL SENSING II, vol. 9372, 27 février 2015 (2015-02-27), page 93720G, XP055327395, 1000 20th St. Bellingham WA 98225-6705 USA ISSN: 0277-786X, DOI: 10.1117/12.2075334 ISBN: 978-1-62841-971-9
- A BRIMONT ET AL: "High speed silicon electro-optical modulators enhanced via slow light propagation References and links", OPT. EXPRESS, vol. 19, no. 21, 5 octobre 2011 (2011-10-05), pages 20878-20885, XP055327121,
- Christelle Monat ET AL: "Slow light enhancement of nonlinear effects in silicon engineered photonic crystal waveguides 4 / OPTICS EXPRESS 2944", Opt. Express, 12 février 2009 (2009-02-12), pages 2945-2953, XP055327409, Extrait de l'Internet: URL:http://www.st-andrews.ac.uk/microphoto nics/Assets/Publications/SlowlightEnhance. pdf [extrait le 2016-12-08]

## Description

L'invention a pour objet un guide à onde lente apte à ralentir la propagation d'un signal optique qu'il guide. L'invention a également pour objet un modulateur, à semi-conducteur, de la phase ou de l'amplitude d'un signal optique incorporant ce guide à onde lente.

L'utilisation d'un guide à onde lente est par exemple utile dans les modulateurs de phase ou d'amplitude de signaux optiques. En effet, cela permet d'améliorer l'efficacité de la modulation de ces modulateurs.

Des guides à onde lente connus comportent :
- un substrat qui s'étend essentiellement dans un plan appelé « plan du substrat »,
- un axe optique tangent en tout point à la direction de propagation du signal optique à l'intérieur du guide à onde lente, cet axe optique s'étendant dans un plan parallèle au plan du substrat,
- une section de ralentissement apte à ralentir la propagation du signal optique, cette section comportant à cet effet des dents latérales disposées de façon symétrique de part et d'autre de l'axe optique avec un pas régulier p le long de l'axe optique depuis le début de cette section de ralentissement jusqu'à sa fin, chaque dent latérale s'étend continûment le long d'une direction d'extension parallèle au plan du substrat, depuis une extrémité proximale jusqu'à une extrémité distale qui constitue la partie de la dent latérale la plus éloignée de l'axe optique et chaque dent latérale comportant un point d'intersection entre sa direction d'extension et l'axe optique, la longueur de chaque dent latérale étant égale à la distance la plus courte entre l'axe optique et son extrémité distale,
- un guide d'onde central qui s'étend le long de l'axe optique et qui comporte de chaque côté de l'axe optique des flancs latéraux, la largeur du guide d'onde central, à l'intérieur de la section de ralentissement, étant définie uniquement entre deux dents latérales immédiatement consécutives et prise égale à la distance la plus courte, mesurée dans une direction transversale parallèle au plan du substrat et perpendiculaire à l'axe optique, entre les flancs latéraux du guide d'onde central situés de chaque côté de l'axe optique et entre ces dents latérales consécutives,
- une région d'élargissement s'étendant le long de l'axe optique, sur une distance supérieure à dₘᵢₙ depuis un début, confondu avec le début de la section de ralentissement, jusqu'à une fin située à l'intérieur de la section de ralentissement, la distance dₘᵢₙ étant une distance égale au plus grand de la longueur d'onde À du signal optique et de 5p, où p est le pas entre les dents latérales, la longueur des dents latérales situées à l'intérieur de la région d'élargissement augmentant continûment en allant du début jusqu'à la fin de cette région d'élargissement, les extrémités distales de toutes les dents latérales situées d'un même côté de l'axe optique à l'intérieur de cette région d'élargissement étant toutes situées, à cet effet, sur une courbe qui s'éloigne continûment de l'axe optique, la longueur de la dent latérale située juste après la fin de la région d'élargissement étant égale ou inférieure à la longueur de la dernière dent latérale située à l'intérieur de cette région d'élargissement, - une région de rétrécissement qui s'étend le long de l'axe optique sur une distance supérieure à dₘᵢₙ depuis un début, situé à l'intérieur de la section de ralentissement, jusqu'à une fin confondue avec la fin de la section de ralentissement, la longueur des dents latérales situées à l'intérieur de la région de rétrécissement, diminuant continûment en allant du début jusqu'à la fin de cette région de rétrécissement, les extrémités distales de toutes les dents latérales situées d'un même côté de l'axe optique à l'intérieur de cette région de rétrécissement étant toutes situées, à cet effet, sur une courbe qui se rapproche continûment de l'axe optique, la longueur de la dent latérale située juste avant le début de la région de rétrécissement étant égale ou inférieure à la longueur de la première dent latérale située à l'intérieur de cette région de rétrécissement.

Par exemple, de tels guides à onde lente sont décrits dans les documents suivants :
- A1 : A. Brimont et al, « High speed silicon electro-optical modulators enhanced via slow light propagation », Optics express 20876, 10/10/2011, Vol 19, no 21 ;
- A2 : Shayan Mookherjea et al, « Localisation in silicon nanophotonic slow - light waveguides », Nature photonics, vol 2, 02/2008,
- Corrado Sciancalepore et Al : "Low-Loss adiabatically-tapered high-constrast gratings for slow-wave modulators on SOI", Optical Sensing II, vol. 9372, 27/02/2015, page 93720G,
- Christelle Monat et Al : "Slow light enhancement of nonlinear effects in silicon engineered photonic crystal waveguide 4 / Optics express 2944", Opt. Express, 12/02/2009, pages 2945-2953,
- JP2013195715A..

Par la suite, les deux premiers articles de cette liste sont désignés sous les termes, respectivement, d'article A1 et d'article A2.

Les guides à onde lente connus présentent :
- soit des points de fonctionnement où le ralentissement du signal optique et les pertes de transmission sont importants,
- soit des points de fonctionnement où le ralentissement du signal optique et les pertes de transmission sont faibles.

Les guides à onde lente connus présentent également une bande interdite photonique étroite.

L'objectif est donc d'améliorer les guides à onde lente connus sur au moins l'un des points suivants :
- proposer un guide à onde lente qui présente des points de fonctionnement où le ralentissement du signal optique est aussi bon qu'avec les guides à onde lente connus mais en présentant des pertes de transmission moins élevées,
- proposer un guide à onde lente qui présente des points de fonctionnement où le ralentissement du signal optique est meilleur qu'avec les guides à onde lente connus et les pertes de transmission sont égales à celles constatées avec ces guides à onde lente connus,
- proposer des guides à onde lente dont la bande interdite photonique est plus large que celle observée dans les guides à onde lente connus.

Elle a donc pour objet un guide à onde lente conforme à la revendication 1

Grâce au chevauchement de la région d'élargissement et de la région initiale, combiné au chevauchement de la région de rétrécissement avec la région finale, le guide à onde lente revendiqué présente les avantages suivants :
1) La bande interdite photonique est plus large qu'en absence des régions initiale et finale.
2) Par rapport à un guide à onde lente connu, le guide à onde lente revendiqué présente de part et d'autre de la bande interdite photonique les points de fonctionnement pour lesquels les pertes de transmission sont identiques à celles des guides à onde lente connus tout en présentant un ralentissement du signal optique plus important.
3) Le guide à onde lente revendiqué présente aussi, de part et d'autre de la bande interdite photonique, des points de fonctionnement pour lesquels le ralentissement du signal optique est le même que celui obtenu avec les guides à onde lente connus, mais avec des pertes de transmission plus faibles.

Enfin, de part et d'autre de la bande interdite photonique du guide à onde lente revendiqué, l'évolution des pertes de transmission en fonction de la longueur d'onde oscille moins que dans les guides à onde lente connus.

Les modes de réalisation de ce guide à onde lente peuvent présenter une ou plusieurs des caractéristiques des revendications dépendantes.

Ces modes de réalisation du guide à onde lente présentent en outre les avantages suivants :
- lorsque la longueur de la section de ralentissement est supérieure à 50 µm, le ralentissement du signal optique est amélioré et/ou les pertes de transmission sont diminuées.

L'invention a également pour objet un modulateur, à semi-conducteur, de la phase ou de l'amplitude d'un signal optique, ce modulateur comportant le guide à onde lente revendiqué.

L'invention sera mieux comprise à la lecture de la description qui va suivre, donnée uniquement à titre d'exemple non limitatif et faite en se référant aux dessins sur lesquels :
- la figure 1 est une illustration schématique et partielle, en vue de dessus, d'un modulateur comportant un guide à onde lente ;
- la figure 2 est une illustration schématique et partielle, en vue de dessus, d'une dent du guide à onde lente de la figure 1 ;
- les figures 3 et 4 sont des illustrations schématiques, en coupe transversale à deux endroits différents, du guide à onde lente de la figure 1 ;
- les figures 5 à 8 sont des graphes illustrant l'évolution, en fonction de la longueur d'onde, de l'indice de groupe et des pertes de transmission dans différents cas de figure ;
- la figure 9 est un graphe illustrant l'évolution, en fonction de la longueur d'onde, de l'indice de groupe dans trois cas de figures différents ;
- la figure 10 est un graphe illustrant l'évolution des pertes de transmission, en fonction de la longueur d'onde, dans les mêmes trois cas de figure que ceux pris en compte dans la figure 9 ;
- la figure 11 est une illustration schématique d'un deuxième mode de réalisation possible d'un guide à onde lente, et
- la figure 12 est une illustration schématique d'un troisième mode de réalisation possible d'un guide à onde lente.

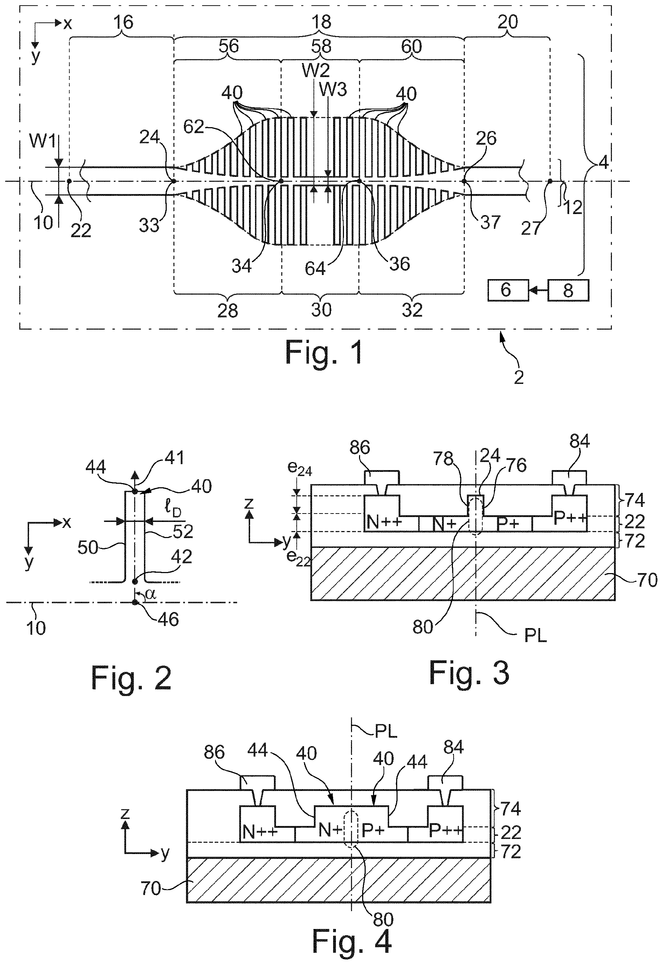

La figure 1 représente un modulateur 2 à semi-conducteur apte à moduler la phase et/ou l'amplitude d'un signal optique. Par exemple, la longueur d'onde λ du signal optique est comprise entre 1250 nm et 1590 nm. Par exemple, la longueur d'onde λ est choisie égale à 1310 nm.

Ici, le modulateur 2 module l'amplitude du signal optique. À cet effet, dans cet exemple de réalisation, il comporte un interféromètre de Mach-Zender. L'interféromètre de Mach-Zender comporte deux branches dont les sorties sont combinées entre elles pour obtenir le signal optique modulé en phase. Au moins l'une de ces branches comporte un guide à onde lente pour améliorer l'efficacité de la modulation et réduire la taille du modulateur 2. L'architecture générale d'un tel modulateur est bien connue et ne sera donc pas décrite ici en détail. Par exemple, pour plus d'informations sur l'architecture générale d'un tel modulateur, le lecteur peut consulter l'article A1.

Ainsi, par la suite, seuls les détails nécessaires pour comprendre l'invention sont décrits. Pour simplifier la figure 1, l'architecture de l'interféromètre de Mach-Zender n'a pas été représentée et seul le guide à onde lente 4 est représenté.

Le modulateur 2 comporte également :
- une chaufferette 6 commandable pour modifier la température du guide 4, et
- un circuit électronique 8 de commande de la chaufferette 6.

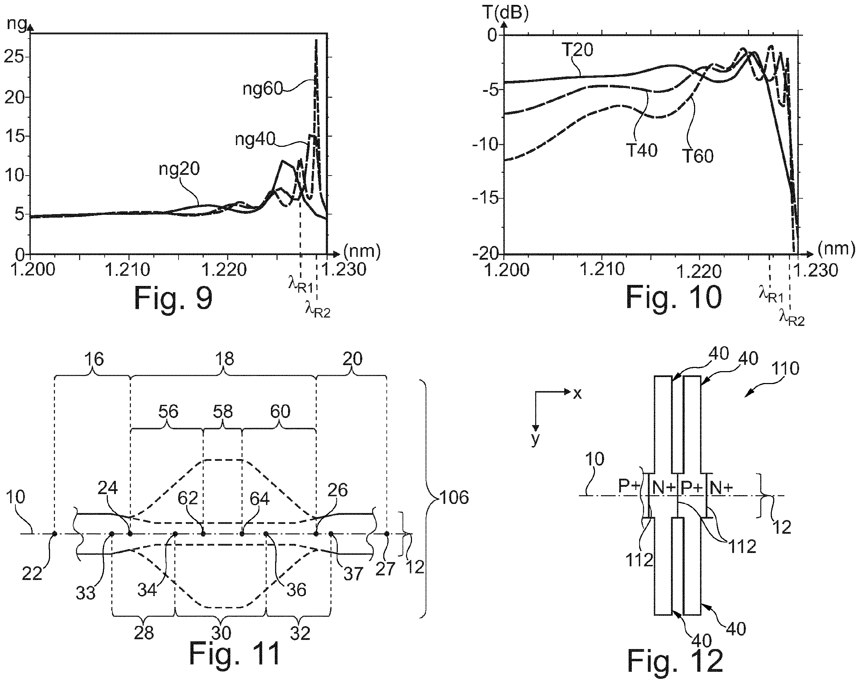

La chaufferette 6 chauffe le guide 4 en réponse à un signal électrique de commande. Le fait de chauffer le guide 4 permet de modifier l'indice de réfraction du guide 4. En faisant cela, il est possible de modifier la valeur λ_{R} qui correspond à un point de fonctionnement particulier du guide 4. Des exemples de tels points de fonctionnement sont décrits plus loin en référence aux figures 9 et 10. L'architecture d'une telle chaufferette est bien connue et ne sera donc pas décrite ici. Typiquement, cette chaufferette 6 est située au-dessus du guide 4. Typiquement, elle comporte une résistance électrique qui convertit le courant qui la traverse en chaleur. Ici, le guide 4 est réalisé en silicium et, de préférence, en silicium monocristallin.

Le circuit électronique 8 génère le signal électrique de commande de la chaufferette 6. Typiquement, le signal électrique de commande généré par ce circuit 8 permet de déplacer la valeur λ_{R} jusqu'à ce que celle-ci soit égale à la longueur d'onde λ du signal optique à moduler, puis de maintenir cette égalité. Par exemple, pour faire cela, le circuit 8 reçoit une information qui est représentative de la longueur d'onde du signal optique à moduler et, en fonction de cette information, il sélectionne automatiquement dans une table pré-enregistrée, la ou les caractéristique(s) du signal de commande à générer pour faire correspondre la valeur λ_{R} avec la longueur d'onde λ.

Sur la figure 1, le guide 4 est représenté en vue de dessus dans le cas particulier où le substrat sur lequel il est réalisé s'étend essentiellement dans un plan horizontal appelé « plan du substrat ». Sur la figure 1 et sur les figures suivantes, l'horizontal est repéré par deux directions X et Y d'un repère orthogonal XYZ. La direction Z de ce repère correspond à la direction verticale. De plus, dans ces figures, la direction X est choisie parallèle à la direction de propagation du signal optique à l'intérieur du guide 4. Sur la figure 1, les traits ondulés qui s'étendent principalement dans la direction Y, indiquent que seule une partie du guide 4 a été représentée.

Dans le guide 4, le signal optique se propage le long d'un axe optique rectiligne 10 parallèle à la direction X. A cet effet, le guide 4 comporte un guide d'onde central 12 qui s'étend le long de l'axe 10 en traversant successivement :
- une section 16 d'entrée à l'intérieur de laquelle le guide 4 est dépourvu d'agencement propre à ralentir le signal optique,
- une section 18 de ralentissement à l'intérieur de laquelle le guide 4 est agencé pour ralentir le signal optique, et
- une section 20 de sortie à l'intérieur de laquelle le guide 4 est dépourvu d'agencement propre à ralentir le signal optique.

Chacune de ces sections est par exemple une zone horizontale rectangulaire ayant deux côtés parallèles à la direction Y.

Le long de l'axe 10, chacune de ces sections s'étend, dans la direction X depuis un début jusqu'à une fin. Ces sections sont immédiatement consécutives dans la direction X de sorte que la fin d'une section précédente est confondue avec le début de la section suivante. Le début et la fin des sections 16 et 20 sont repérés, sur la figure 1, par des points désignés par les références numériques, respectivement, 22, 24, 26 et 27. Ainsi, le début et la fin de la section 18 de ralentissement porte respectivement les références numériques 24 et 26.

Ici, le guide d'onde 12 présente une structure connue sous le terme anglais de « Rib waveguide ». Autrement dit, le guide 12 est formé :
- d'une dalle 22 (figures 3 et 4) parallélépipédique en silicium qui s'étend continûment le long de l'axe 10, et
- d'une bande 24 en silicium réalisée sur la dalle 22 et centrée sur l'axe 10.

La bande 24 forme une nervure rectiligne sur la dalle 22.

Ici, la largeur, dans la direction Y, de la dalle 22 est constante et strictement supérieure à la largeur de la bande 24 dans cette même direction.

Par la suite, lorsque l'on parle de « largeur » du guide 12, on désigne la largeur de la bande 24 mesurée dans la direction Y. Plus précisément, dans les sections 16 et 20, par largeur du guide 12, on désigne la distance la plus courte, mesurée dans la direction Y, entre des flancs latéraux verticaux de la bande 24. Dans la section 18, la largeur du guide 12 peut être mesurée uniquement en un emplacement situé entre deux dents 40 consécutives dans la direction X. Ainsi, dans la section 18, largeur du guide 12 est définie uniquement entre deux dents 40 immédiatement consécutives. Entre deux dents 40 immédiatement consécutive, la largeur du guide 12 est prise égale à la distance la plus courte, mesurée dans la direction Y, entre les flancs latéraux du guide 12 situés de chaque côté de l'axe 10 et entre ces deux dents 40 consécutives. Autrement dit, la largeur du guide 12 entre deux dents 40 consécutives est définie comme étant égale à la plus petite largeur, dans la direction Y, du guide 4 entre ces deux dents 40. Les dents 40 sont décrites plus loin.

Sur la figure 1, seule la partie du guide 12 correspondant à la bande 24 est représentée. La section transversale du guide 12 est décrite plus en détail en référence aux figures 3 et 4. De plus, le guide à onde lente 4 est symétrique par rapport à un plan longitudinal PL (figures 3 et 4) vertical contenant l'axe 10. Par conséquent, par la suite, seule la partie du guide 4 située du côté gauche de ce plan PL est décrite en détail.

Ici, à l'intérieur des sections 16 et 20, la largeur du guide 12 est constante et égale à W1. Par exemple, W1 est compris entre 200 nm et 1 µm. Par exemple, la longueur du guide 12, dans la direction X, à l'intérieur des sections 16 et 20, est supérieure à λ, ou 3λ ou 5λ, où λ est la longueur d'onde du signal optique qui se propage dans le guide 4.

La section 18 de ralentissement s'étend le long de l'axe 10 sur une longueur L₁₈. Typiquement, L₁₈ est supérieure à 10 µm ou 20 µm ou 50 µm et, généralement, inférieure à 1 mm ou 6 mm.

Entre la fin 24 de la section 16 et le début 26 de la section 20, le guide 12 comporte successivement, le long de l'axe 10 : une région initiale 28, une région centrale 30 et une région finale 32. Les régions 28, 30 et 32 sont des régions horizontales rectangulaires dont deux des côtés sont perpendiculaires à l'axe 10.

La région 28 s'étend, le long de l'axe 10, depuis un début 33 jusqu'à une fin 34. Ici, le début 33 est confondu avec le début 24 de la section 18. La fin 34 est représentée sur la figure 1 par un point situé à l'intersection d'un côté de la région 28 et de l'axe 10. La fin 34 est située à l'intérieur de la section 18 de ralentissement.

La région finale 32 s'étend, le long de l'axe 10, depuis un début 36 jusqu'à une fin 37. Ici, la fin 37 est confondue avec la fin 26. Le début 36 est situé à l'intérieur de la section 18.

Le début et la fin de la région centrale 30 sont confondus avec, respectivement, la fin 34 et le début 36. Ainsi, par la suite, les références numériques 34 et 36 sont aussi utilisées pour désigner, respectivement, le début et la fin de la région centrale 30.

Dans ce premier mode de réalisation, le guide 4 est symétrique par rapport à un plan médian vertical perpendiculaire à l'axe 10 et qui coupe l'axe 10 au milieu de la section 18. Par conséquent, les régions 28 et 30 sont symétriques l'une de l'autre par rapport à ce plan et la région 30 n'est pas décrite plus en détail.

Chacune des régions 28, 30 et 32 s'étend le long de l'axe 10 sur une distance supérieure à dₘᵢₙ et, de préférence, supérieure à 2dₘᵢₙ ou 5dₘᵢₙ. dₘᵢₙ est définie par la relation suivante : dₘᵢₙ = Max[À ; 5p] où :
- Max[...] est la fonction qui retourne la plus grande des valeurs listées entre les crochets,
- λ est la longueur d'onde du signal optique, et
- p est le pas entre les dents 40 et sera décrit plus loin.

Par exemple, ici, la longueur des régions 28, 30 et 32 est supérieure à 5 µm et, de préférence, supérieure à 20 µm.

A l'intérieur de la région 28, la largeur du guide 12 décroît progressivement et de façon monotone et continue depuis une largeur égale à W1 jusqu'à une largeur égale à W3. De préférence, W3 est 1,3 fois ou 2 fois plus petit que W1. Pour cela, les flancs latéraux verticaux du guide 12 à l'intérieur de la région 28 sont disposés le long d'une limite latérale qui se rapproche continûment de l'axe 10 en allant du début 33 jusqu'à la fin 34. La projection orthogonale de cette limite dans un plan horizontal forme une courbe. Cette courbe se rapproche continûment de l'axe 10 en allant du début 33 jusqu'à la fin 34 sans présenter de point d'inflexion. De nombreuses formes sont possibles pour cette courbe et donc pour la limite latérale à l'intérieur de la région 28. Par exemple, ici, cette courbe est identique à la partie décroissante de l'apodisation de Blackman. Toutefois, d'autres courbes sont possibles comme par exemple une droite décroissante ou une exponentielle décroissante ou autres.

Juste avant le début 33, la largeur du guide 12 ne diminue pas. Ici, elle est constante. Juste après la fin 34, la largeur du guide 12 ne diminue plus.

A l'intérieur de la région 30, la largeur du guide 12 est constante et égale à W3.

La section 18 de ralentissement comporte les dents latérales 40 disposées de façon périodique dans la direction X de manière à ralentir la propagation du signal optique dans cette direction. Pour simplifier la figure 1, la référence 40 n'a été indiquée que pour quelques-unes des dents représentées sur cette figure. Un agrandissement d'une telle dent 40 est également visible sur la figure 2.

Chaque dent 40 s'étend, le long d'une direction 41 (figure 2) d'extension depuis une extrémité proximale 42 jusqu'à une extrémité distale 44. Typiquement, la direction 41 est centrée sur la dent 40 et passe par le centre géométrique de cette dent 40. Le centre géométrique d'une dent est le barycentre de tous les points appartenant à cette dent en affectant le même poids à chacun de ces points. Les directions 41 des dents 40 situées du même côté de l'axe 10 sont parallèles entre elles. Ici, la direction 41 est sensiblement parallèle à la direction Y. Ainsi, dans ce mode de réalisation, l'angle α entre la direction 41 et l'axe 10 est égal à 90° à plus ou moins 3° près ou plus ou moins 5° près. L'extrémité proximale 42 est ancrée dans les flancs latéraux du guide 12 et située sur la limite latérale de ce guide 12. Ainsi, le flanc latéral du guide 12 situé entre deux dents 40 consécutives relie les extrémités proximales 42 de ces deux dents. Pour cela, il s'étend d'une extrémité proximale 42 jusqu'à la suivante dans la direction X.

Les dents 40 sont réalisées en silicium dans la même couche de silicium que celle utilisée pour réaliser la bande 24. Ainsi, chaque dent 40 ne forme qu'un seul bloc de matière avec le guide 12.

Chaque dent 40 comporte un point 46 d'intersection respectif entre sa direction 41 d'extension et l'axe 10.

Ici, chaque dent 40 comporte deux flancs latéraux verticaux 50, 52 qui s'étendent chacun depuis l'extrémité proximale 42 jusqu'à l'extrémité distale 44. Ici, ces flancs 50 et 52 sont plats et tous les deux parallèles à la direction Y. Dans ce mode de réalisation, l'extrémité distale 44 est également plane. Elle est formée par un plan vertical parallèle à la direction X. Ainsi, la section horizontale d'une dent 40 est rectangulaire.

La largeur I_{D} des dents 40 dans la direction X est constante. Par exemple, la largeur I_{D} est comprise entre p/5 et p/(1,2) et, de préférence, égale à p/2.

La longueur d'une dent 40 est ici définie comme étant la distance la plus courte, dans la direction Y, entre l'axe 10 et l'extrémité distale 44 de cette dent.

Les dents 40 sont disposées avec un pas p régulier dans la direction X de part et d'autre de l'axe 10. Le pas p est égal à la distance qui sépare deux points 46 d'intersection immédiatement consécutifs le long de l'axe 10. Le pas p est inférieur à λ/n_{eff} et, de préférence, inférieur à λ/(2n_{eff}), ou λ(4n_{eff}) où n_{eff} est l'indice effectif de propagation du mode optique se propageant dans le guide 4. L'indice n_{eff} est aussi connu sous le nom de « constante de phase du mode ». Il est défini par la relation suivante : n_{g} = n_{eff} - λdn_{eff}/dλ, où n_{g} est l'indice de groupe.

Le pas p est généralement supérieur à 50 nm. Ici, pour les applications numériques, le pas p est pris égal à 210 nm.

Le facteur de remplissage de la section 18 est défini comme étant égal au rapport S1/S2 où :
- S1 est la surface de la projection orthogonale de la section 18 sur un plan horizontal, c'est-à-dire la surface de la projection orthogonale des parties réalisées en silicium du guide 4 et situées à l'intérieur de la section 18, et
- S2 est la surface de la projection orthogonale de la plus petite enveloppe convexe qui contient entièrement la projection orthogonale de la section 18 sur ce même plan horizontal.

Ainsi, plus le facteur de remplissage est faible, plus la surface de silicium à l'intérieur de la section 18 est faible. Typiquement, le facteur de remplissage est compris entre 0,25 et 0,75 ou entre 0,45 et 0,55. Ici, le facteur de remplissage est choisi égal à 0,5.

La section 18 comporte trois régions horizontales immédiatement consécutives en allant dans la direction X : une région 56 d'élargissement, une région 58 intermédiaire et une région 60 de rétrécissement. Ces régions 56, 58 et 60 sont rectangulaires avec deux côtés parallèles à la direction Y.

La région 56 s'étend dans la direction X depuis le début 24 jusqu'à une fin 62. La région 60 s'étend dans la direction X depuis un début 64 jusqu'à la fin 26. Le début de la région 58 est confondu avec la fin 62 et porte donc la même référence numérique. La fin de la région 58 est confondue avec le début 64 et porte donc la même référence numérique.

Chacune de ces régions 56, 58 et 60 s'étend le long de l'axe 10 sur une distance supérieure à dₘᵢₙ et, de préférence, supérieure à 2dₘᵢₙ ou 5dₘᵢₙ.

Dans ce mode de réalisation particulier, les régions 56, 58 et 60 sont identiques, respectivement, aux régions 28, 30 et 32. Ainsi, les débuts 24 et 33 sont confondus, les fins 34 et 62 sont confondues, les débuts 36 et 64 sont confondus et les fins 26 et 37 sont confondues.

La longueur des dents 40 situées à l'intérieur de la région 56 augmente progressivement de façon monotone et continue en allant du début 24 jusqu'à la fin 62. Ici, on considère qu'une dent 40 est située à l'intérieur d'une région si son point 46 d'intersection et compris entre le début et la fin de cette région. Par la suite, l'expression « la dent de la région » signifie la dent située à l'intérieur de cette région.

A cet effet, les extrémités distales 44 de chacune des dents 40 de la région 56 sont situées sur une courbe horizontale qui s'éloigne de façon monotone et continue de l'axe 10 en allant du début 24 jusqu'à la fin 62. De nombreuses formes sont possibles pour cette courbe. Par exemple, il peut s'agir d'une droite. Ici, cette courbe est la partie croissante d'une apodisation de Blackman. Ici, la longueur de la dernière dent 40 de la région 56 est égale à W2. Typiquement, W2 est inférieur ou égal à 2λ ou 5λ. W2 est également strictement supérieur à W1/2 et, avantageusement, supérieur à W1.

Au-delà de la région 56, la longueur des dents 40 n'augmente plus. Ainsi, les dents de la région 58 ont ici toutes une longueur égale à W2.

Dans ce mode de réalisation, la région 60 est le symétrie de la région 56 par rapport au plan vertical médian et ne sera donc pas décrite plus en détail.

La figure 3 représente une coupe verticale, parallèle au plan YZ, qui coupe le guide 4 entre deux dents 40. Le guide 4 est réalisé sur un substrat 70 qui s'étend principalement dans un plan horizontal. L'épaisseur du substrat 70 est typiquement supérieure à 100 µm ou 200 µm. Par exemple, le substrat 70 est réalisé en silicium.

Une couche 72 en oxyde de silicium (SiO₂) est directement réalisée sur le substrat 70.

Le guide 4 est réalisé en silicium monocristallin directement sur la couche 72. Ici, le guide 4 est encapsulé à l'intérieur d'une autre couche 74 d'oxyde de silicium. Plus précisément, le guide 4 comporte la dalle rectangulaire 22 en silicium monocristallin sur laquelle est réalisée la bande 24 qui définit la largeur du guide 12. Typiquement, les sections verticales de la dalle 22 et de la bande 24 sont rectangulaires. Sur la figure 3, les flancs latéraux verticaux du guide 12 situés de chaque côté de l'axe 10 sont désignés par les références numériques 76 et 78. En pratique, à cause d'imperfections dans le procédé de fabrication du guide 4, les flancs verticaux ne sont pas parfaitement verticaux. Par exemple, l'angle entre les flancs verticaux et l'horizontale est compris entre 80° et 90°. Sur les figures, ces imperfections n'ont pas été représentées.

L'épaisseur e22 de la dalle 22 est généralement inférieure ou égale à l'épaisseur e24 de la bande 24. Par exemple, les épaisseurs e22 et e24 sont généralement inférieures ou égales à 500 nm ou inférieures ou égales à 250 nm. Pour les simulations numériques données ici, ces épaisseurs e22 et e24 sont toutes les deux choisies égales à 150 nm.

Pour modifier rapidement l'indice de réfraction n_{f} du guide 12 en réponse à un signal électrique de commande, le guide 12 comporte une jonction PN (Positive-Negative) 80 verticale et située dans le plan longitudinal PL. Par exemple, la jonction 80 s'étend continûment, depuis le début 24 jusqu'à la fin 26. Pour réaliser la jonction 80, les zones du guide 4 situées à gauche du plan PL sont dopées P (symbole « P+ » sur les figures 3 et 4) et les zones du guide 4 situées à droite de ce plan sont dopées N (symbole « N+ » sur les figures 3 et 4).

Pour faire varier la densité des porteurs de charge au niveau de la jonction 80, les zones dopées P sont électriquement raccordées à une ou plusieurs prises 84 de contact et les zones dopées N sont électriquement raccordées à une ou plusieurs prises 86 de contact.

En appliquant une différence de potentiels entre les prises 84 et 86, la phase du signal optique qui se propage dans le guide 4 est modifiée.

De préférence, les zones du guide 4 les plus éloignées du plan longitudinal PL et qui sont directement en contact mécanique et électrique avec les prises 84 et 86 sont dopées plus fortement (symbole « P++ » et « N++ », respectivement, sur les figures 3 et 4) que les zones plus proches du plan PL.

La figure 4 représente une coupe verticale, parallèle au plan YZ, du guide 4 au niveau d'une paire de dents 40. Cette figure permet de voir, en coupe verticale, les deux dents 40 symétriques l'une de l'autre par rapport au plan PL.

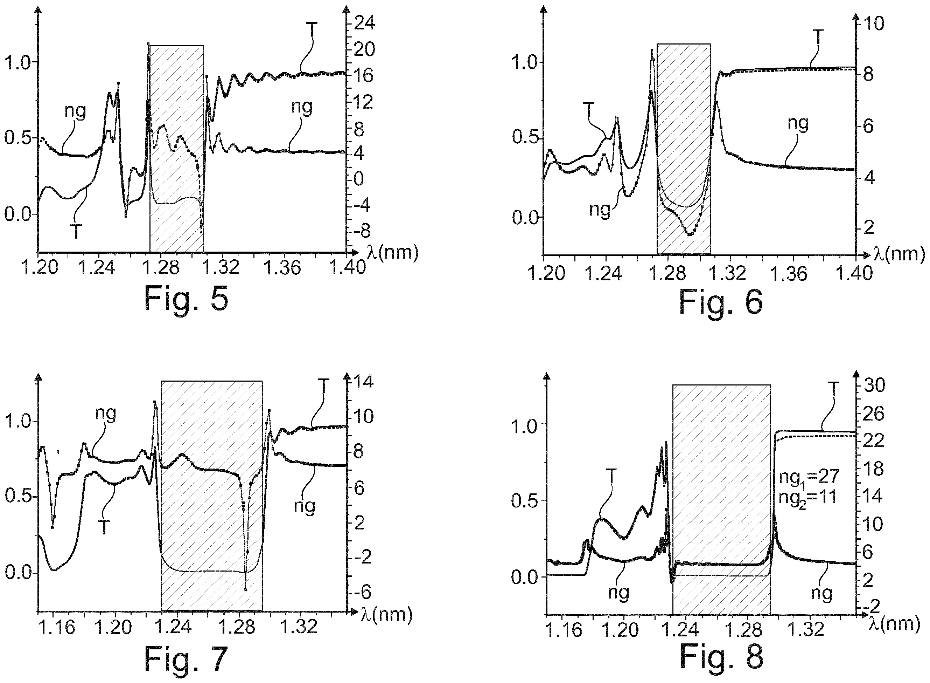

Les figures 5 à 8 représentent l'évolution de l'indice de groupe n_{g} et l'évolution des pertes de transmission à travers le guide 4 en fonction de la longueur d'onde λ du signal optique qui se propage dans ce guide. Sur ces graphes :
- la courbe qui représente l'évolution de l'indice n_{g} en fonction de la longueur d'onde λ est désignée par le symbole « n_{g} »,
- la courbe qui représente l'évolution des pertes de transmission en fonction de la longueur d'onde λ est repérée par le symbole « T »,
- l'axe des abscisses est gradué en nanomètres,
- l'axe des ordonnées situé à gauche représente la valeur des pertes de transmission,
- l'axe des ordonnées situé à droite représente la valeur de l'indice n_{g}, et
- le rectangle hachuré au centre de ces graphes représente la bande interdite photonique du guide 4.

Les graphes des figures 5 à 8 ont été obtenus par simulation numérique pour différentes valeurs des paramètres du guide 4. Plus précisément, la valeur de l'indice n_{g} a été obtenue en mettant en oeuvre la méthode décrite dans l'article suivant :
- A. Debnath et al, « Extraction of group index of lossy photonic crystal waveguides », Optics Letters 193, 09/01/2015, Vol 40, no 2 ;.
On rappelle que plus l'indice n_{g} est élevé, plus le ralentissement du signal optique dans le guide à onde lente est important (n_{g}=c/v_{g}, où c est la célérité de la lumière et v_{g} la vitesse de groupe).

Le graphe de la figure 5 a été obtenu dans le cas où :
- la longueur L₁₈ de la section 18 est égale à 20 µm,
- W2 = 2000 nm,
- W1 = W3 = 400 nm (ainsi les régions 28 et 32 sont omises),
- les régions 56 et 60 sont omises.

Puisque les régions 28 et 32 ne sont pas mises en oeuvre, ce cas correspond à un cas connu de l'état de la technique. Dans ce cas, on observe qu'il est possible d'atteindre des indices n_{g} élevé, c'est-à-dire supérieur à 10 de chaque côté de la bande interdite photonique. Toutefois, les pertes de transmission oscillent fortement à droite de la bande interdite photonique et sont importantes à proximité de la bande interdite photonique (zone hachurée).

Le graphe de la figure 6 a été obtenu dans le cas où :
- la longueur L₁₈ de la section 18 est égale à 20 µm,
- W2 = 2000 nm,
- W1 = W3 = 400 nm (ainsi les régions 28 et 32 sont omises),
- les régions 56 et 60 sont présentes.

Le graphe de la figure 6 illustre donc aussi des résultats obtenus en absence de mise en oeuvre des régions 28 et 32 et correspond donc à une architecture connue de l'état de la technique. Dans ce cas, on constate que les oscillations des pertes de transmission à proximité des bords de la bande interdite photonique sont fortement réduites. Par contre, les valeurs maximales de l'indice n_{g} à gauche et à droite de la bande interdite photonique sont aussi fortement réduites. Ici, ces valeurs maximales sont maintenant inférieures à 9.

Le graphe de la figure 7 a été obtenu dans le cas où :
- la longueur L₁₈ de la section 18 est égale à 20 µm,
- W2 = 2000 nm,
- W1 = 400 nm et W3 = 200 nm,
- les régions 28, 32, 56 et 60 sont présentes et les régions 30 et 58 sont omises (leur longueur est nulle).

Dans ce cas, les régions 28, 32, 56 et 60 sont simultanément mises en oeuvre. Cela se traduit par une forte croissance des valeurs maximales de l'indice n_{g} à proximité des bords droit et gauche de la bande interdite photonique par rapport au cas de la figure 6. De plus, cette augmentation est obtenue en conservant des oscillations des pertes de transmission sur les bords droit et gauche de la bande interdite photonique bien plus faible que celles observées dans le cas de la figure 5. Enfin, on observe un élargissement important de la bande interdite photonique.

Le graphe de la figure 8 a été obtenu dans le cas où :
- la longueur L₁₈ de la section 18 est égale à 60 µm,
- W2 = 2000 nm,
- W1 = 400 nm et W3 = 200 nm,
- les régions 28, 32, 56 et 60 sont présentes et les régions 30 et 58 sont omises.

Dans ce cas aussi, les régions 28, 32, 56 et 60 sont simultanément mises en oeuvre. On constate que l'augmentation de la longueur L₁₈ se traduit par une augmentation des valeurs maximales de l'indice n_{g} sur les bords droit et gauche de la bande interdite photonique par rapport au cas de la figure 7. De plus, les oscillations des pertes de transmission à droite de la bande interdite photonique sont supprimées et l'amplitude de ces oscillations à gauche de la bande interdite photonique est limitée.

La figure 9 représente l'évolution de la valeur de l'indice n_{g} en fonction de la longueur d'onde du signal optique dans la partie située à gauche de la bande interdite photonique. Sur ce graphe, comme sur le graphe de la figure 10, le bord gauche de la bande interdite photonique commence à 1,23 µm. Les courbes n_{g20} et n_{g60} correspondent aux valeurs de l'indice n_{g} dans les mêmes configurations que celles décrites, respectivement, pour les figures 7 et 8. La courbe n_{g40} correspond à la même configuration du guide à onde lente que celle décrite dans le cas de la figure 7 mais avec une longueur L₁₈ de 40 µm pour la section 18.

La figure 10 représente l'évolution de la valeur des pertes de transmission en fonction de la longueur d'onde du signal optique dans la partie située à gauche de la bande interdite photonique. Sur ce graphe, plus les pertes de transmission sont faibles, plus la valeur est proche de 0. Les courbes T20, T40 et T60 correspondent, respectivement, aux mêmes configurations du guide à onde lente que celles décrites pour les courbes n_{g20}, n_{g40} et n_{g60}.

On remarque que dans le cas où la section 18 fait 60 µm de longueur, on peut obtenir les points de fonctionnement suivant pour le guide à onde lente :
- premier point de fonctionnement : λ_{R1} = 1,2275 µm, n_{g} = 12 et les pertes de transmission sont inférieures à 1 dB,
- deuxième point de fonctionnement : λ_{R2} = 1,2285 µm, n_{g} > 25 et les pertes de transmission sont inférieures à 2,5 dB.

Ces deux points de fonctionnement sont meilleurs que ceux possibles avec les cas décrits en référence aux figures 5 et 6. En particulier, ils permettent d'avoir à la fois un fort ralentissement du signal optique et de faible perte de transmission.

En chauffant le guide à onde lente avec la chaufferette 6, cela décale horizontalement les courbes des graphes des figures 5 à 10 sans modifier l'allure de ces courbes. En d'autres termes, le fait de chauffer le guide 4 modifie les valeurs λ_{R1} et λ_{R2} des premier et second points de fonctionnement mais ne modifie pas la valeur de l'indice n_{g} et des pertes de transmission de ces premier et second points de fonctionnement.

Typiquement, le circuit 8 de commande est conçu pour chauffer le guide 4 jusqu'à atteindre le point de fonctionnement souhaité. Par exemple, si l'on souhaite utiliser le premier point de fonctionnement décrit précédemment, le circuit 8 commande la chaufferette 6 jusqu'à ce que la valeur λ_{R1} soit égale à la longueur d'onde λ du signal optique guidé par le guide 4. Une fois le point de fonctionnement atteint, le circuit 8 commande la chaufferette 6 pour maintenir le fonctionnement du guide 4 sur ce point de fonctionnement.

La figure 11 représente un guide à onde lente 100 susceptible d'être utilisé à la place du guide 4 dans le modulateur 2. Le guide 100 est identique au guide 4 sauf que les régions 28, 30 et 32 ne sont plus confondues avec les régions, respectivement, 56, 58 et 60. Plus précisément, dans le guide 100 :
- la région 28 débute avant la région 56 et se termine avant la fin 62 de la région 56,
- la région 32 débute après le début 64 de la région 60 et se termine après la fin 26 de la région 60,
- la région 30 débute avant le début 62 de la région 58 et se termine après la fin 64 de la région 58.

Sur la figure 11, pour simplifier cette figure, à l'intérieur de la section 18, les dents 40 n'ont pas été représentées. À l'intérieur de cette section 18, seules les courbes sur lesquelles sont situées les extrémités distales 44 et les limites latérales du guide 12 ont été représentées par des lignes en pointillés.

La figure 12 représente une partie d'un guide à onde lente 110 dans lequel la jonction 80 est remplacée par une succession, dans la direction X, de plusieurs jonctions PN 112. Chacune de ces jonctions 112 est située dans un plan vertical respectif parallèle au plan YZ. Pour cela, les zones dopées P et N sont réparties en alternance le long de l'axe 10. De préférence, chaque zone dopée comprend au moins une paire de dents 40 symétriques l'une par rapport à l'autre par rapport au plan PL. Chaque zone dopée est par exemple raccordée électriquement à un potentiel électrique par l'intermédiaire d'une prise de contact de façon similaire à ce qui a été décrit en référence aux figures 3 et 4.

De nombreux autres modes de réalisation sont possibles. Par exemple, le guide à onde lente peut être utilisé dans d'autres applications qu'un modulateur de phase ou d'amplitude d'un signal optique. Dans ce cas, la jonction PN propre à modifier la densité de charges à l'intérieur de ce guide à onde lente peut être omise. Par exemple, le guide à onde lente ne comporte alors aucune partie dopée. À titre d'exemple d'une autre application possible, on peut citer l'utilisation du guide 4 en tant que filtre. Dans ce cas, c'est sa capacité à stopper la propagation d'un signal optique à l'intérieur d'une bande interdite photonique qui est exploitée. Dans le cas où le guide à onde lente est utilisé, par exemple, en tant que filtre, la structure du guide à onde lente peut être celle connue sous le terme anglais de « Strip ». Autrement dit, la dalle 22 représentée sur les figures 3 et 4 peut être omise. De même, les prises de contact électriques sont omises.

En variante, la valeur W3 est égale à zéro. En effet, le signal optique peut quand même se propager le long de l'axe 10 même dans ce cas particulier car les distances entre les dents 40 sont très courtes.

Le guide à onde lente n'est pas nécessairement symétrique par rapport au plan médian vertical. Par exemple, la région initiale peut être plus courte ou plus longue que la région finale. De même, la région d'élargissement peut être plus courte ou plus longue que la région de rétrécissement.

Quel que soit le mode de réalisation, la région centrale peut être omise. De même, la région intermédiaire peut aussi être omise. Dans ces cas, la fin de la région initiale est confondue avec le début de la région finale et/ou la fin de la région d'élargissement est confondue avec le début de la région de rétrécissement.

En variante, l'angle entre la direction 41 d'extension des dents 40 et l'axe 10 est différent de 90°. Par exemple, cet angle est compris entre 30° et 150° ou entre 45° et 135°. Ainsi, dans ces modes de réalisation, les dents sont inclinées soit vers l'avant soit vers l'arrière par rapport à la direction de propagation du signal optique.

Les dents 40 peuvent avoir d'autres formes. En particulier, il n'est pas nécessaire que la section horizontale de ces dents soit rectangulaire. Par exemple, la section horizontale de la dent 40 peut aussi être triangulaire. La dent 40 peut aussi avoir une section horizontale identique à celle représentée dans l'article A1 ou A2.

La valeur W2 peut être supérieure à 2λ. Toutefois, dans ce cas, la partie de la dent 40 qui s'étend au-delà de 2λ a très peu d'influence sur le fonctionnement du guide à onde lente. Dès lors, lorsque la valeur W2 est supérieure à 2λ, la longueur des dents 40 peut être quelconque à partir du moment où elle reste supérieure à 2λ. En particulier, dans ce cas, il n'est pas nécessaire que toutes les dents 40 situées à l'intérieur de la région intermédiaire 58 aient la même longueur. Par exemple, en variante, la longueur d'une dent 40 de la région intermédiaire 58 est supérieure à la longueur de la dent 40 qui la suit immédiatement. De même, dans ce cas, les dents 40 dont les longueurs sont supérieures à 2λ n'ont pas besoin d'être symétriques, par rapport au plan PL.

En variante, la jonction 80 s'étend le long de l'axe 10 sur une distance plus grand ou plus petite que la longueur de la section 18. Par exemple, dans un autre mode de réalisation, la jonction 80 s'étend uniquement du début 34 jusqu'à la fin 36 de la région centrale 30.

Dans une autre variante, la jonction PN est remplacée par une jonction PIN (« *Positive Intrinsic Negative »)* telle que celle utilisée dans les diodes PIN.

Le chevauchement entre les régions 28, 56 ou les régions 30, 58 ou les régions 32, 60 peut être agencé de n'importe quelle façon à partir du moment où la longueur du chevauchement entre ces deux régions le long de l'axe 10, est supérieure à dₘᵢₙ ou 2dₘᵢₙ ou 5dₘᵢₙ. Par exemple, les régions 28, 30 et 32 peuvent débuter avant ou après le début des régions, respectivement, 56, 58 et 60. De même, les régions 28, 30 et 32 peuvent se terminer avant ou après la fin des régions, respectivement, 56, 58 et 60.

Dans un autre mode de réalisation, plusieurs guides à onde lente tels que ceux décrits ci-dessus sont raccordés en série les uns après les autres.

Dans la région centrale 30, la largeur du guide d'onde central n'est pas nécessairement constante. Par exemple, cette largeur peut varier périodiquement.

Le guide à onde lente peut être réalisé dans d'autres matériaux que du silicium. Par exemple, lorsque le guide à onde lente est encapsulé dans de l'oxyde de silicium, le guide 4 peut être réalisé en nitrure de silicium ou en nitrure d'aluminium ou en germanium. De même, le guide à onde lente peut être encapsulé dans d'autres matériaux que de l'oxyde de silicium. Par exemple, lorsque le guide 4 est réalisé en silicium, il peut être encapsulé dans du nitrure de silicium, du TiO₂, Al₂O₃, ou du nitrure d'aluminium, ou encore d'autres matériaux comme les matériaux chalcogénures

En variante, le même guide à onde lente est utilisé pour ralentir simultanément plusieurs signaux optiques ayant des longueurs d'onde différentes. Par exemple, dans ce cas, chaque longueur d'onde différente correspond à un point de fonctionnement respectif du guide à onde lente.

## Revendications

1. Guide à onde lente apte à ralentir la propagation d'un signal optique qu'il guide, ce guide comporte :
- un substrat (70) qui s'étend essentiellement dans un plan appelé « plan du substrat »,
- un axe optique (10) tangent en tout point à la direction de propagation du signal optique à l'intérieur du guide à onde lente, cet axe optique s'étendant dans un plan parallèle au plan du substrat,
- une section (18) de ralentissement apte à ralentir la propagation du signal optique, cette section comportant à cet effet des dents latérales (40) disposées de façon symétrique de part et d'autre de l'axe optique avec un pas régulier p le long de l'axe optique depuis le début (24) de cette section de ralentissement jusqu'à sa fin (26), chaque dent latérale s'étend continûment le long d'une direction (41) d'extension parallèle au plan du substrat, depuis une extrémité proximale (42) jusqu'à une extrémité distale (44) qui constitue la partie de la dent latérale la plus éloignée de l'axe optique et chaque dent latérale comportant un point (46) d'intersection entre sa direction d'extension et l'axe optique, la longueur de chaque dent latérale étant égale à la distance la plus courte entre l'axe optique et son extrémité distale,
- un guide (12) d'onde central qui s'étend le long de l'axe optique et qui comporte de chaque côté de l'axe optique des flancs latéraux (76, 78), la largeur du guide d'onde central, à l'intérieur de la section de ralentissement, étant définie uniquement entre deux dents latérales immédiatement consécutives et prise égale à la distance la plus courte, mesurée dans une direction transversale parallèle au plan du substrat et perpendiculaire à l'axe optique, entre les flancs latéraux du guide d'onde central situés de chaque côté de l'axe optique et entre ces dents latérales consécutives,
- une région (56) d'élargissement s'étendant le long de l'axe optique, sur une distance supérieure à dₘᵢₙ depuis un début (24), confondu avec le début de la section de ralentissement, jusqu'à une fin (62) située à l'intérieur de la section de ralentissement, la distance dₘᵢₙ étant une distance égale au plus grand de la longueur d'onde λ du signal optique et de 5p, où p est le pas entre les dents latérales (40), la longueur des dents latérales situées à l'intérieur de la région d'élargissement augmentant continûment en allant du début jusqu'à la fin de cette région d'élargissement, les extrémités distales (44) de toutes les dents latérales situées d'un même côté de l'axe optique à l'intérieur de cette région d'élargissement étant toutes situées, à cet effet, sur une courbe qui s'éloigne continûment de l'axe optique, la longueur de la dent latérale située juste après la fin de la région d'élargissement étant égale ou inférieure à la longueur de la dernière dent latérale située à l'intérieur de cette région d'élargissement,
- une région (60) de rétrécissement qui s'étend le long de l'axe optique sur une distance supérieure à dₘᵢₙ depuis un début (64), situé à l'intérieur de la section de ralentissement, jusqu'à une fin (26) confondue avec la fin de la section de ralentissement, la longueur des dents latérales situées à l'intérieur de la région de rétrécissement, diminuant continûment en allant du début (64) jusqu'à la fin (26) de cette région de rétrécissement, les extrémités distales (44) de toutes les dents latérales situées d'un même côté de l'axe optique à l'intérieur de cette région de rétrécissement étant toutes situées, à cet effet, sur une courbe qui se rapproche continûment de l'axe optique, la longueur de la dent latérale située juste avant le début de la région de rétrécissement étant égale ou inférieure à la longueur de la première dent latérale située à l'intérieur de cette région de rétrécissement,
**caractérisé en ce que** le guide à onde lente comporte aussi :
- une région initiale (28) qui s'étend, le long de l'axe optique, sur une distance supérieure à dₘᵢₙ, depuis un début (33) à partir duquel la largeur du guide d'onde central commence à diminuer continûment jusqu'à une fin (34) au-delà de laquelle la largeur du guide d'onde central ne diminue plus jusqu'à la fin de la section de ralentissement, cette région initiale chevauchant la région d'élargissement sur une distance non nulle supérieure à dₘᵢₙ,
- une région finale (32) qui s'étend, le long de l'axe optique, sur une distance supérieure à dₘᵢₙ, depuis un début (36) à partir duquel la largeur du guide d'onde central commence à augmenter continûment jusqu'à une fin (37) au-delà de laquelle la largeur du guide d'onde central n'augmente plus, cette région finale chevauchant la région de rétrécissement sur une distance non nulle supérieure à dₘᵢₙ.

2. Guide selon la revendication 1, dans lequel la longueur de la section de ralentissement entre son début (24) et sa fin (26) est supérieure à 15 µm ou 50 µm.

3. Guide selon l'une quelconque des revendications précédentes, dans lequel l'angle entre la direction (41) d'extension de chaque dent latérale et l'axe optique (10) est compris entre 85° et 95°.

4. Guide selon l'une quelconque des revendications précédentes, dans lequel le guide à onde lente comporte une région intermédiaire (58) qui s'étend le long de l'axe optique sur une distance supérieure à dₘᵢₙ depuis un début (62) confondu avec la fin de la région (56) d'élargissement jusqu'à une fin (64) confondue avec le début de la région (60) de rétrécissement, la longueur des dents à l'intérieur de cette région intermédiaire étant constante.

5. Guide selon l'une quelconque des revendications précédentes, dans lequel le guide à onde lente comporte une région centrale (30) qui s'étend le long de l'axe optique sur une distance supérieure à dₘᵢₙ depuis un début (34) confondu avec la fin de la région initiale (28) jusqu'à une fin (36) confondue avec le début de la région finale (32), la largeur du guide d'onde central à l'intérieur de cette région centrale étant constante.

6. Guide selon l'une quelconque des revendications 1 à 3, dans lequel la fin (62) de la région (56) d'élargissement est confondue avec le début (64) de la région (60) de rétrécissement et la fin (34) de région initiale (28) est confondue avec le début (36) de la région finale (32).

7. Guide selon l'une quelconque des revendications précédentes, dans lequel la largeur du guide (12) d'onde central est deux fois plus grande au début (33) de la région initiale qu'à la fin (34) de cette région initiale, et la largeur du guide (12) d'onde central est deux fois plus petite au début (36) de la région finale qu'à la fin (37) de la région finale.

8. Guide selon l'une quelconque des revendications précédentes, dans lequel le rapport S1/S2 est compris entre 0,25 et 0,75, où :
- S1 est la surface de la projection orthogonale de la section (18) de ralentissement sur le plan du substrat, et
- S2 est la surface de la plus petite enveloppe convexe qui contient entièrement la projection orthogonale de la section (18) de ralentissement.

9. Guide selon l'une quelconque des revendications précédentes, dans lequel :
- le pas p est strictement inférieur à λ/n_{eff}, où λ est la longueur d'onde du signal optique et n_{eff} est l'indice effectif de propagation du signal optique se propageant dans ce guide à onde lente,
- la direction d'extension de chaque dent latérale forme un angle constant avec l'axe optique,
- les flancs latéraux (76, 78) du guide d'onde central sont disposés de façon symétriques de chaque côté de l'axe optique.

10. Guide selon l'une quelconque des revendications précédentes, dans lequel :
- le guide (12) à onde lente comporte une chaufferette (6) apte à chauffer le guide d'onde central à une température souhaitée en réponse à un signal électrique de commande, et
- un circuit (8) de commande apte à générer le signal électrique de commande qui permet de maintenir le guide d'onde central à une température où l'indice de groupe n_{g} du mode fondamental TE du signal optique qui se propage dans le guide d'onde central est supérieur ou égal à huit.

11. Modulateur, à semi-conducteur, de la phase ou de l'amplitude d'un signal optique, ce modulateur comportant :
- un guide (4 ; 110) à onde lente, et
- un dispositif commandable (80 ; 112) apte à faire varier la densité des porteurs libres de charge à l'intérieur du guide à onde lente en réponse à un signal de commande électrique pour moduler la phase ou l'amplitude du signal optique,
**caractérisé en ce que** le guide à onde lente est conforme à l'une quelconque des revendications précédentes.

12. Modulateur selon la revendication 11, dans lequel le guide (12) d'onde central comporte au moins une jonction PN (80 ; 112) ou PIN et le modulateur comporte des prises (84, 86) de contact apte à appliquer une différence de potentiels de part et d'autre de cette jonction PN ou PIN pour faire varier la densité des porteurs de charge à l'intérieur du guide d'onde central en réponse à un signal électrique de commande.

## Patentansprüche

1. Verzögerungswellenleiter, der die Ausbreitung eines optischen Signals verzögern kann, das er leitet, wobei dieser Leiter aufweist:
- ein Substrat (70), das sich hauptsächlich in einer «Ebene des Substrats » genannten Ebene erstreckt,
- eine optische Achse (10), die an jedem Punkt die Ausbreitungsrichtung des optischen Signals im Inneren des Verzögerungswellenleiters tangiert, wobei diese optische Achse sich in einer Ebene parallel zur Ebene des Substrats erstreckt,
- einen Verzögerungsabschnitt (18), der die Ausbreitung des optischen Signals verzögern kann, wobei dieser Abschnitt zu diesem Zweck seitliche Zähne (40) aufweist, die symmetrisch zu beiden Seiten der optischen Achse mit einer gleichmäßigen Teilung p entlang der optischen Achse vom Anfang (24) dieses Verzögerungsbereichs bis an sein Ende (26) angeordnet sind, wobei jeder seitliche Zahn sich kontinuierlich entlang einer Ausdehnungsrichtung (41) parallel zur Ebene des Substrats von einem proximalen Ende (42) bis zu einem distalen Ende (44) erstreckt, das den Teil des seitlichen Zahns bildet, der am weitesten von der optischen Achse entfernt ist, und jeder seitliche Zahn einen Schnittpunkt (46) zwischen seiner Ausdehnungsrichtung und der optischen Achse aufweist, wobei die Länge jedes seitlichen Zahns gleich dem kürzesten Abstand zwischen der optischen Achse und seinem distalen Ende ist,
- einen zentralen Wellenleiter (12), der sich entlang der optischen Achse erstreckt und der auf jeder Seite der optischen Achse Seitenflanken (76, 78) aufweist, wobei die Breite des zentralen Wellenleiters innerhalb des Verzögerungsabschnitts nur zwischen zwei direkt aufeinanderfolgenden seitlichen Zähnen definiert wird und gleich dem kürzesten Abstand, gemessen in einer Querrichtung parallel zur Ebene des Substrats und lotrecht zur optischen Achse, zwischen den Seitenflanken des zentralen Wellenleiters genommen wird, die sich auf jeder Seite der optischen Achse und zwischen diesen aufeinanderfolgenden seitlichen Zähnen befinden,
- einen Erweiterungsbereich (56), der sich entlang der optischen Achse über einen Abstand größer als dₘᵢₙ von einem Anfang (24), der mit dem Anfang des Verzögerungsabschnitts zusammenfällt, bis zu einem Ende (62) erstreckt, das sich im Inneren des Verzögerungsabschnitts befindet, wobei der Abstand dₘᵢₙ ein Abstand gleich dem Größten der Wellenlänge λ des optischen Signals und von 5p ist, wobei p die Teilung zwischen den seitlichen Zähne (40) ist, wobei die Länge der seitlichen Zähne, die sich im Inneren des Erweiterungsbereichs befinden, vom Anfang bis zum Ende dieses Erweiterungsbereich kontinuierlich zunimmt, wobei die distalen Enden (44) aller seitlichen Zähne, die sich auf einer gleichen Seite der optischen Achse im Inneren dieses Erweiterungsbereichs befinden, sich zu diesem Zweck alle auf einer Kurve befinden, die sich kontinuierlich von der optischen Achse entfernt, wobei die Länge des seitlichen Zahns, der sich direkt nach dem Ende des Erweiterungsbereichs befindet, gleich der oder kleiner als die Länge des letzten seitlichen Zahns ist, der sich im Inneren dieses Erweiterungsbereich befindet,
- einen Verengungsbereich (60), der sich entlang der optischen Achse über einen Abstand größer als dₘᵢₙ von einem Anfang (64), der sich im Inneren des Verzögerungsabschnitts befindet, bis zu einem Ende (26) erstreckt, das mit dem Ende des Verzögerungsabschnitts zusammenfällt, wobei die Länge der seitlichen Zähne, die sich im Inneren des Verengungsbereichs befinden, kontinuierlich vom Anfang (64) bis zum Ende (26) dieses Verengungsbereichs abnimmt, wobei die distalen Enden (44) aller seitlichen Zähne, die sich auf einer gleichen Seite der optischen Achse im Inneren dieses Verengungsbereichs befinden, sich alle zu diesem Zweck auf einer Kurve befinden, die sich der optischen Achse kontinuierlich annähert, wobei die Länge des seitlichen Zahns, der sich direkt vor dem Anfang des Verengungsbereichs befindet, gleich der oder kleiner als die Länge des ersten seitlichen Zahns ist, der sich im Inneren dieses Verengungsbereichs befindet,
**dadurch gekennzeichnet, dass** der Verzögerungswellenleiter auch aufweist:
- einen Anfangsbereich (28), der sich entlang der optischen Achse über einen Abstand größer als dₘᵢₙ von einem Anfang (33), von dem ausgehend die Breite des zentralen Wellenleiters kontinuierlich abzunehmen beginnt, bis zu einem Ende (34) erstreckt, jenseits dessen die Breite des zentralen Wellenleiters bis zum Ende des Verzögerungsabschnitts nicht mehr abnimmt, wobei dieser Anfangsbereich den Erweiterungsbereich über einen Abstand ungleich Null größer als dₘᵢₙ überdeckt,
- einen Endbereich (32), der sich entlang der optischen Achse über einen Abstand größer als dₘᵢₙ von einem Anfang (36), von dem ausgehend die Breite des zentralen Wellenleiters kontinuierlich zuzunehmen beginnt, bis zu einem Ende (37) erstreckt, jenseits dessen die Breite des zentralen Wellenleiters nicht mehr zunimmt, wobei dieser Endbereich den Verengungsbereich über einen Abstand ungleich Null größer als dₘᵢₙ überdeckt.

2. Leiter nach Anspruch 1, wobei die Länge des Verzögerungsabschnitts zwischen seinem Anfang (24) und seinem Ende (26) größer als 15 µm oder 50 µm ist.

3. Leiter nach einem der vorhergehenden Ansprüche, wobei der Winkel zwischen der Ausdehnungsrichtung (41) jedes seitlichen Zahns und der optischen Achse (10) zwischen 85° und 95° liegt.

4. Leiter nach einem der vorhergehenden Ansprüche, wobei der Verzögerungswellenleiter einen Zwischenbereich (58) aufweist, der sich entlang der optischen Achse über einen Abstand größer als dₘᵢₙ von einem Anfang (62), der mit dem Ende des Erweiterungsbereichs (56) zusammenfällt, bis zu einem Ende (64) erstreckt, das mit dem Anfang des Verengungsbereichs (60) zusammenfällt, wobei die Länge der Zähne im Inneren dieses Zwischenbereichs konstant ist.

5. Leiter nach einem der vorhergehenden Ansprüche, wobei der Verzögerungswellenleiter einen zentralen Bereich (30) aufweist, der sich entlang der optischen Achse über einen Abstand größer als dₘᵢₙ von einem Anfang (34), der mit dem Ende des Anfangsbereichs (28) zusammenfällt, bis zu einem Ende (36) erstreckt, das mit dem Anfang des Endbereichs (32) zusammenfällt, wobei die Breite des zentralen Wellenleiters im Inneren dieses zentralen Bereichs konstant ist.

6. Leiter nach einem der Ansprüche 1 bis 3, wobei das Ende (62) des Erweiterungsbereichs (56) mit dem Anfang (64) des Verengungsbereichs (60) zusammenfällt, und das Ende (34) des Anfangsbereichs (28) mit dem Anfang (36) des Endbereichs (32) zusammenfällt.

7. Leiter nach einem der vorhergehenden Ansprüche, wobei die Breite des zentralen Wellenleiters (12) am Anfang (33) des Anfangsbereichs doppelt so groß ist wie am Ende (34) dieses Anfangsbereichs, und die Breite des zentralen Wellenleiters (12) am Anfang (36) des Endbereichs doppelt so klein ist wie am Ende (37) des Endbereichs.

8. Leiter nach einem der vorhergehenden Ansprüche, wobei das Verhältnis S1/S2 zwischen 0,25 und 0,75 liegt, wobei :
- S1 die Fläche der orthogonalen Projektion des Verzögerungsabschnitts (18) auf die Ebene des Substrats ist, und
- S2 die Fläche der kleinsten konvexen Hüllkurve ist, die die orthogonale Projektion des Verzögerungsabschnitts (18) vollständig enthält.

9. Leiter nach einem der vorhergehenden Ansprüche, wobei:
- die Teilung p strikt kleiner ist als λ/n_{eff}, wobei λ die Wellenlänge des optischen Signals und n_{eff} der effektive Ausbreitungsindex des optischen Signals ist, das sich in diesem Verzögerungswellenleiter fortpflanzt,
- die Ausdehnungsrichtung jedes seitlichen Zahns einen konstanten Winkel mit der optischen Achse bildet,
- die Seitenflanken (76, 78) des zentralen Wellenleiters symmetrisch auf beiden Seiten der optischen Achse angeordnet sind.

10. Leiter nach einem der vorhergehenden Ansprüche, wobei:
- der Verzögerungswellenleiter (12) eine Heizeinrichtung (6) aufweist, die als Reaktion auf ein elektrisches Steuersignal den zentralen Wellenleiter auf eine gewünschte Temperatur erwärmen kann, und
- eine Steuerschaltung (8), die das elektrische Steuersignal erzeugen kann, das es ermöglicht, den zentralen Wellenleiter auf einer Temperatur zu halten, bei der der Gruppenindex n_{g} des Grundmodus TE des optischen Signals, das sich im zentralen Wellenleiter fortpflanzt, größer als oder gleich acht ist.

11. Modulator, mit Halbleiter, der Phase oder der Amplitude eines optischen Signals, wobei dieser Modulator aufweist:
- einen Verzögerungswellenleiter (4; 110), und
- eine steuerbare Vorrichtung (80; 112), die die Dichte der freien Ladungsträger innerhalb des Verzögerungswellenleiters als Reaktion auf ein elektrisches Steuersignal variieren kann, um die Phase oder die Amplitude des optischen Signals zu modulieren,
**dadurch gekennzeichnet, dass** der Verzögerungswellenleiter einem der vorhergehenden Ansprüche entspricht.

12. Modulator nach Anspruch 11, wobei der zentrale Wellenleiter (12) mindestens einen PN- oder PIN-Übergang (80 ; 112) aufweist, und der Modulator Kontaktanschlüsse (84, 86) aufweist, die eine Potentialdifferenz zu beiden Seiten dieses PN- oder PIN-Übergangs anlegen kann, um die Dichte der Ladungsträger innerhalb des zentralen Wellenleiters als Reaktion auf ein elektrisches Steuersignal zu variieren.

## Claims

1. Slow light waveguide designed to slow the propagation of an optical signal that it is guiding, this guide comprising:
- a substrate (70) which extends essentially in a plane referred to as "substrate plane",
- an optical axis (10) tangent at any point to the direction of propagation of the optical signal inside of the slow light waveguide, this optical axis extending in a plane parallel to the substrate plane,
- a slowing section (18) designed to slow the propagation of the optical signal, this section comprising, for this purpose, lateral teeth (40) disposed symmetrically on either side of the optical axis with a regular pitch p along the optical axis from the start (24) of this slowing section up to its end (26), each lateral tooth extending continuously in a direction (41) of extension parallel to the substrate plane, from a proximal end (42) up to a distal end (44) which constitutes the part of the lateral tooth furthest from the optical axis and each lateral tooth comprising a point (46) of intersection between its direction of extension and the optical axis, the length of each lateral tooth being equal to the shortest distance between the optical axis and its distal end,
- a central waveguide (12) which extends along the optical axis and which comprises, on either side of the optical axis, lateral sidewalls (76, 78), the width of the central waveguide, inside of the slowing section, only being defined between two immediately consecutive lateral teeth and taken equal to the shortest distance, measured in a transverse direction parallel to the substrate plane and perpendicular to the optical axis, between the lateral sidewalls of the central waveguide situated on either side of the optical axis and between these consecutive lateral teeth,
- a broadening region (56) extending along the optical axis, over a distance greater than dₘᵢₙ from a start (24), coinciding with the start of the slowing section, up to an end (62) situated inside of the slowing section, the distance dₘᵢₙ being a distance equal to the greater of the wavelength λ of the optical signal and of 5p, where p is the pitch between the lateral teeth (40), the length of the lateral teeth situated inside of the broadening region continuously increasing going from the start up to the end of this broadening region, the distal ends (44) of all the lateral teeth situated on the same side of the optical axis inside of this broadening region being all situated, for this purpose, on a curve getting continuously further from the optical axis, the length of the lateral tooth situated just after the end of the broadening region being equal to or less than the length of the last lateral tooth situated inside of this broadening region,
- a narrowing region (60) which extends along the optical axis over a distance greater than dₘᵢₙ from a start (64), situated inside of the slowing section, up to an end (26) coinciding with the end of the slowing section, the length of the lateral teeth situated inside of the narrowing region, continuously decreasing going from the start (64) up to the end (26) of this narrowing region, the distal ends (44) of all the lateral teeth situated on the same side of the optical axis inside of this narrowing region being all situated, for this purpose, on a curve getting continuously closer to the optical axis, the length of the lateral tooth situated just before the start of the narrowing region being equal to or less than the length of the first lateral tooth situated inside of this narrowing region,
**characterized in that** the slow light waveguide also comprises:
- an initial region (28) which extends, along the optical axis, over a distance greater than dₘᵢₙ, from a start (33) starting from which the width of the central waveguide begins to continuously decrease up to an end (34) beyond which the width of the central waveguide no longer decreases up to the end of the slowing section, this initial region overlapping the broadening region over a non-zero distance greater than dₘᵢₙ,
- a final region (32) which extends, along the optical axis, over a distance greater than dₘᵢₙ, from a start (36) starting from which the width of the central waveguide begins to continuously increase up to an end (37) beyond which the width of the central waveguide no longer increases, this final region overlapping the narrowing region over a non-zero distance greater than dₘᵢₙ.

2. Guide according to Claim 1, in which the length of the slowing section between its start (24) and its end (26) is greater than 15 µm or 50 µm.

3. Guide according to any one of the preceding claims, in which the angle between the direction (41) of extension of each lateral tooth and the optical axis (10) is in the range between 85° and 95°.

4. Guide according to any one of the preceding claims, in which the slow light waveguide comprises an intermediate region (58) which extends along the optical axis over a distance greater than dₘᵢₙ from a start (62) coinciding with the end of the broadening region (56) up to an end (64) coinciding with the start of the narrowing region (60), the length of the teeth inside of this intermediate region being constant.

5. Guide according to any one of the preceding claims, in which the slow light waveguide comprises a central region (30) which extends along the optical axis over a distance greater than dₘᵢₙ from a start (34) coinciding with the end of the initial region (28) up to an end (36) coinciding with the start of the final region (32), the width of the central waveguide inside of this central region being constant.

6. Guide according to any one of Claims 1 to 3, in which the end (62) of the broadening region (56) coincides with the start (64) of the narrowing region (60) and the end (34) of the initial region (28) coincides with the start (36) of the final region (32).

7. Guide according to any one of the preceding claims, in which the width of the central waveguide (12) is twice as big at the start (33) of the initial region than at the end (34) of this initial region, and the width of the central waveguide (12) is half as big as at the start (36) of the final region than at the end (37) of the final region.

8. Guide according to any one of the preceding claims, in which the ratio S1/S2 is in the range between 0.25 and 0.75, where:
- S1 is the surface area of the orthogonal projection of the slowing section (18) on the substrate plane, and
- S2 is the surface area of the smallest convex envelope which totally contains the orthogonal projection of the slowing section (18).

9. Guide according to any one of the preceding claims, in which:
- the pitch p is strictly less than λ/n_{eff}, where λ is the wavelength of the optical signal and n_{eff} is the effective index of propagation of the optical signal propagating within this slow light waveguide,
- the direction of extension of each lateral tooth forms a constant angle with the optical axis,
- the lateral sidewalls (76, 78) of the central waveguide are disposed symmetrically on either side of the optical axis.

10. Guide according to any one of the preceding claims, in which:
- the slow light guide (12) comprises a heater (6) designed to heat the central waveguide to a desired temperature in response to an electrical control signal, and
- a control circuit (8) designed to generate the electrical control signal which allows the central waveguide to be maintained at a temperature where the group index n_{g} of the fundamental TE mode of the optical signal which is propagating in the central waveguide is greater than or equal to eight.

11. Semiconductor modulator of the phase or of the amplitude of an optical signal, this modulator comprising:
- a slow light guide (4; 110), and
- a controllable device (80; 112) designed to make the density of the free charge carriers inside of the slow light waveguide vary in response to an electrical control signal for modulating the phase or the amplitude of the optical signal,
**characterized in that** the slow light waveguide is according to any one of the preceding claims.

12. Modulator according to Claim 11, in which the central waveguide (12) comprises at least one PN or PIN junction (80; 112) and the modulator comprises contact areas (84, 86) intended for applying a potential difference on either side of this PN or PIN junction so as to make the density of the charge carriers inside of the central waveguide vary in response to an electrical control signal.
